Europäisches Patentamt

European Patent Office

Office européen des brevets

(11) Veröffentlichungsnummer: **0 413 978 A2**

## (12) EUROPÄISCHE PATENTANMELDUNG

(21) Anmeldenummer: 90114096.2

(22) Anmeldetag: 23.07.90

(51) Int. Cl.⁵: **H01R 13/68**, H04Q 1/14

(30) Priorität: 21.08.89 DE 3927574

(43) Veröffentlichungstag der Anmeldung:
**27.02.91 Patentblatt 91/09**

(84) Benannte Vertragsstaaten:
**AT BE CH DE ES FR GB GR IT LI NL**

(71) Anmelder: **Siemens Aktiengesellschaft**
**Wittelsbacherplatz 2**
**D-8000 München 2(DE)**

(72) Erfinder: **Häckl, Hermann, Dipl.-Ing.**
**Erlbachstrasse 35**
**D-8000 München 60(DE)**

(54) Schutzeinrichtung für einen Verteiler in einer Telekommunikationsanlage.

(57) An ein Kontaktbauteil (z. B. 1) eines Verteilers sind separat ein Spannungsschutzstecker (13) und Stromschutzstecker (14) anschaltbar. Die Steckkontakte (12) für den Stromschutzstecker sind als Trennkontakte ausgebildet, die bei gezogenem Stecker geschlossen sind. In diese Trennkontakte können auch Steckzungen von Trennsteckern oder Prüfsteckern eingesteckt werden.

Dadurch wird für den Stromschutzstecker (14), den Prüfstecker oder den Trennstecker nur ein Kontakt benötigt.

FIG 2

EP 0 413 978 A2

## SCHUTZEINRICHTUNG FÜR EINEN VERTEILER IN EINER TELEKOMMUNIKATIONSANLAGE

Die Erfindung bezieht sich auf eine Schutzeinrichtung für einen Verteiler in einer Telekommunikations-, insbesondere Fernsprechanlage. Eine derartige Schutzeinrichtung ist z. B. durch die DE 32 12 013 C2 (= GB 2 117 577 B) bekannt geworden. Danach weist ein Schutzstecker Überspannungsableiter als Querglied gegen Erde und Stromsicherungen als Längsglied auf. Der Schutzstecker ist rückseitig an Kontaktbauteile eines Verteilers anschaltbar. Zusätzlich zu diesen Steckkontaktstellen ist das Kontaktbauteil mit weiteren Steckkontakten versehen, zwischen die von der Frontseite her Trenn- oder Prüfstecker eingesteckt werden können. Um die elektrischen Leitungen über die Stromsicherungen des Schutzsteckers führen zu können, müssen die Kontaktbauteile mit zur Rückseite durchgehenden Kontaktfedern versehen werden, die sowohl mit den ankommenden als auch abgehenden Leitungen verbunden sind.

Ferner ist aus der DE 86 23 697 U1 ein Verteilerbauteil mit Federkontakten bekannt, zwischen die ein plättchenförmiger Schutzstecker eingesteckt werden kann, der eine Schmelzsicherung in Form einer gedruckten Leiterbahn aufweist.

Der Erfindung liegt die Aufgabe zugrunde, die elektrischen Leitungen sowohl mit Überspannungsableitern als auch mit Stromsicherungen schützen zu können und den Aufbau der Kontaktbauteile zu vereinfachen.

Diese Aufgabe wird durch die Erfindung gemäß Anspruch 1 gelöst. Durch das Einstecken des Stromschutzsteckers in die Steckkontakte für die Trennstecker bleiben die Kontaktbauteile unverändert. Die Kontakte für den Spannungsschutzstecker können einpolig mit den Kontaktteilen verbunden sein und daher ent sprechend einfach und kostengünstig ausgestaltet werden. Würde man die Stromsicherungen zusätzlich zu den Überspannungsableitern auf dem Spannungsschutzstecker anordnen, so müßten die zugehörigen Kontaktteile auch an dieser Stelle ähnlich wie die Trennkontaktstellen zweiteilig ausgebildet werden. Das bedeutet, daß bei einem rückseitig angesetzten Schutzstecker, zwei getrennte Kontaktteile von der Frontseite zur Rückseite geführt werden müßten. In der Praxis kann jedoch auf den Schutz durch Stromsicherungen häufig verzichtet werden. Dies läßt sich jedoch nicht sicher vorausplanen, so daß alle Kontaktbauteile mit den zusätzlichen Steckkontaktteilen versehen werden müßten.

Diese Vorleistung wird durch die Erfindung eingespart. Die Stromstecker werden selektiv nur an die Leitungen angeschaltet, die besonders geschützt werden müssen. Sind die Stecker gezogen, so liegen die beiden Pole der Steckkontakte kontaktgebend aneinander, so daß die elektrische Verbindung geschlossen ist.

Vorteilhafte Weiterbildungen der Erfindung sind in den Ansprüchen 2 bis 6 gekennzeichnet:

Durch die Weiterbildung nach Anspruch 2 sind beide Schutzstecker zur optischen Überwachung und zum Auswechseln besonders gut zugänglich.

Bei der Weiterbildung nach Anspruch 3 können die ankommenden und abgehenden Leitungen an zwei benachbarte Reihen von Anschlußelementen angeschlossen sein. Die Anschlußelemente sind z. B. mit ins Innere des Kontaktbauteils ragenden Kontaktfedern verbunden. Die Steckzungen des Schutzsteckers werden zwischen den beiden Reihen der Anschlußelemente hindurch bis zu den Kontaktstellen der Kontaktfedern eingeschoben. Die Steckzungen weisen dann beidseitig getrennte Kontaktflecken auf, an denen die Kontaktfedern anliegen. Die Steckzungen sind z. B. Bestandteil einer beidseitig kaschierten Leiterplatte des Schutzsteckers. Die Stromsicherungen sind auf der den Anschlußelementen für die Rangierleitungen abgewandten Seite der Leiterplatte angeordnet. Dadurch bleiben die Anschlußelemente für die Rangierleitungen frei zugänglich, so daß der Zugang zu den Anschlußelementen kaum beeinträchtigt wird.

Die Weiterbildung nach Anspruch 4 läßt sich beispielsweise dadurch realisieren, daß die Steckzungen über die Steckkontaktstellen hinaus verlängert sind und daß die Kontaktflecken an den Steckkontaktstellen enden. Zieht man nun den Schutzstecker soweit heraus, daß die Kontaktflecken der Steckzungen die Kontaktfedern nicht mehr berühren, so ist die Verbindung zwischen den ankommenden und abgehenden Leitungen getrennt.

Durch die Weiterbildung nach Anspruch 5 kann jede Leitung einzeln geschützt werden. Dies ermöglicht es, im Falle einer durchgeschmolzenen Sicherung den Schutzstecker auszutauschen, ohne daß die anderen Leitungen davon betroffen sind.

Durch die Weiterbildung nach Anspruch 6 können die Leitungen getrennt oder geprüft werden, ohne daß dazu der Schutzstecker gezogen werden muß.

Im folgenden wird die Erfindung anhand eines in der Zeichnung dargestellten Ausführungsbeispieles näher erläutert.

Es zeigen
Fig. 1 eine Draufsicht auf eine Verteilerleiste mit angeschlossenen Leitungen,
Fig. 2 einen vergrößerten Schnitt durch die Verteilerleiste entlang der Linie 11-11 in Figur 1 mit schematisiert dargestellten Schutzsteckern,
Fig. 3 eine Draufsicht auf Kontaktteile der Verteilerleiste nach Figur 2,

Fig. 4 einen Schnitt durch ein flaches Kontaktbauteil eines Schichtverteilers mit schematisiert dargestellten Schutzsteckern,

Fig. 5 eine vergrößerte perspektivische Ansicht eines Schutzsteckers mit Stromsicherungen und Trennkontakten.

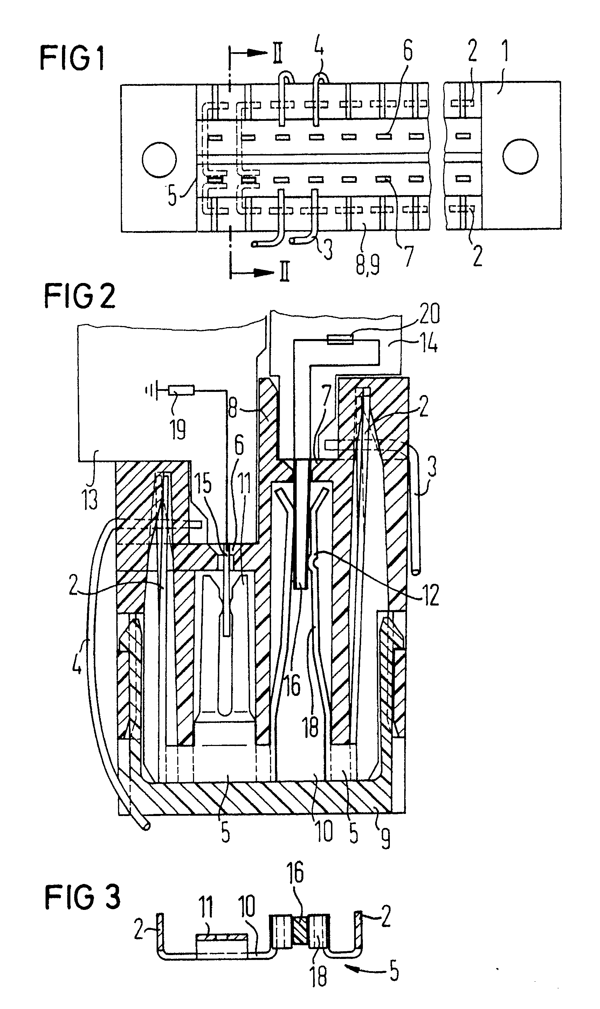

Nach Figur 1 weist ein als längliche Verteilerleiste 1 ausgebildetes Kontaktbauteil Schneidklemmen 2 auf, die auf einer Bedienungsseite der Verteilerleiste 1 entlang der beiden Längsseiten angeordnet sind. An die Schneidklemmen 2 sind von Teilnehmern ankommende Leitungen 3 und zu einer Vermittlungseinrichtung führende abgehende Leitungen 4 angeschlossen. Jeweils eine Schneidklemme 2 für eine ankommende Leitung 3 und eine gegenüberliegende Schneidklemme 2 für eine abgehende Leitung 4 sind Bestandteile von elektrisch miteinander verbundenen Kontaktteilen 5. Diese sind durch Steckeröffnungen 6, 7 in einem Gehäuse 8, 9 der Verteilerleiste 1 für Schutz- und Prüfstecker zugänglich.

Nach den Figuren 2 und 3 besteht das Gehäuse aus einem bedienungsseitigen Frontteil 8 und einem deckelartigen Rückteil 9. Das Frontteil 8 ist mit zum Rückteil 9 hin offenen Aufnahmekammern für die Kontaktteile 5 versehen. Diese können durch einfaches Einstecken von der Rückseite her in das Frontteil 8 eingesetzt werden und sind in diesem vollständig aufgenommen und lagerichtig gehalten. Die Kontaktteile 5 stehen hochkant und senkrecht auf dem Rückteil 9, das mit dem Frontteil 8 verrastet ist. Zwischen den Schneidklemmen 2 weisen die Kontaktteile 5 entlang dem Rückteil 9 einen Basisabschnitt 10 auf, der die Schneidklemmen 2 miteinander verbindet. Diese sind durch Abbiegen um 90° parallel zur Längsrichtung der Verteilerleiste 1 gestellt. Vom Basisabschnitt 10 aus ragen zusätzlich zu den Schneidklemmen Steckkontakte 11 und 12 für einen Spannungsschutzstecker 13 und einen Stromschutzstecker 14.

Die gabelförmigen Steckkontakte 11 für den Spannungsschutzstecker 13 sind als einpoliger Doppelkontakt für jeweils eine Steckzunge 15 des Spannungsschutzsteckers 13 ausgebildet. Die Steckzunge 15 ist elektrisch mit einem Pol eines Überspannungsableiters 19 verbunden, dessen anderer Pol an Erde liegt.

Die Steckkontakte 15 sind aus zwei Federschenkeln 18 gebildet, die Bestandteile der getrennten Kontaktteile 5 sind. Die Steckzungen 16 des Stromschutzsteckers 14 sind zwischen die beiden Federschenkel 18 gesteckt und weisen getrennte Kontaktflächen für jeden der beiden Federschenkel 18 auf. Die beiden Kontaktflächen sind elektrisch mit den beiden Polen einer Stromsicherung 20 des Stromschutzsteckers 14 verbunden. Dadurch werden die ankommenden und abgehenden Leitungen über die z. B. als Schmelzsicherung ausgebildete Stromsicherung 20 elektrisch miteinander verbunden.

Die beiden Schutzstecker 13, 14 sind von der Bedienungsseite der Verteilerleiste 1 her einsteckbar. Sie sind daher für Kontrollen und andere Wartungsarbeiten besonders gut zugänglich.

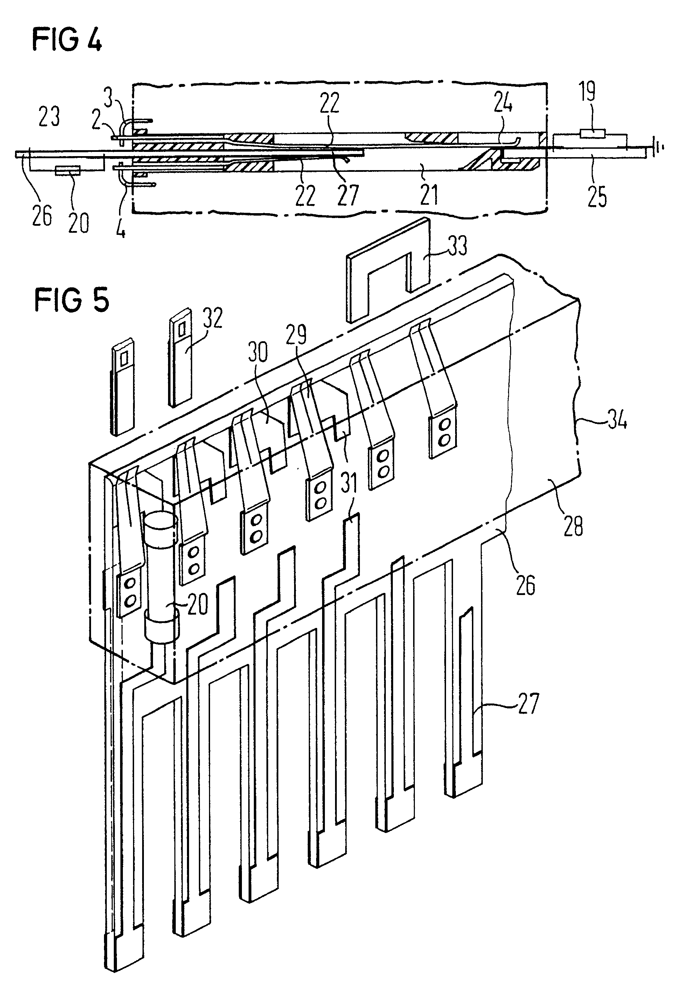

Nach Figur 4 ist ein flaches Kontaktbauteil 21 eines strichpunktiert angedeuteten Schichtverteilers mit den Schneidklemmen 2 für die ankommenden rangierbaren Leitungen 3 und abgehenden Leitungen 4 versehen. Die Schneidklemmen 2 ragen frontseitig aus dem Kontaktbauteil 21 heraus und sind in zwei sich senkrecht zur Zeichnungsebene erstreckenden Reihen angeordnet. Jeweils zwei sich paarweise gegenüberliegende Schneidklemmen der beiden Reihen sind elektrisch über ins Innere des Kontaktbauteils 21 ragende Kontaktfedern 22 und einen anderen Stromschutzstecker 23 derart miteinander verbunden, daß die beiden Pole der Stromsicherung 20 mit den beiden Kontaktfedern 22 elektrisch verbunden sind.

Eine der beiden Kontaktfedern 22 ist bis zur Rückseite des Kontaktbauteils 21 verlängert und bildet dort einen zusätzlichen Steckkontakt 24 für einen anderen Spannungsschutzstecker 25, der z. B. senkrecht zur Zeichnungsebene von der Seite des Kontaktbauteils 21 her einsteckbar ist. Die Überspannungsableiter 19 des Spannungsschutzsteckers 25 sind mit einem Pol mit dem Steckkontakt 24 und mit ihrem anderen Pol mit Erde verbunden.

Der Stromschutzstecker 23 weist eine doppelseitig gedruckte Leiterplatte 26 auf, deren Steckzungen 27 zwischen den beiden Schneidklemmen 2 hindurch bis zu den Steckkontaktstellen der Kontaktfedern 22 eingesteckt sind. Die Stromsicherungen 20 sind auf der den ankommenden Rangierleitungen 3 abgewandten Seite der Leiterplatte 26 angeordnet. Dadurch bleiben die Schneidklemmen 2 für die ankommenden rangierbaren Leitungen 3 frei zugänglich.

Ein anderer Stromschutzstecker 28 nach Figur 5 kann anstelle des Stromschutzsteckers 23 mit seinen Steckzungen in das Kontaktbauteil 21 eingesteckt werden. Der Stromschutzstecker 28 kann aber auch bei prinzipiell gleichem Aufbau so abgeändert und angepaßt werden, daß er den Stromschutzstecker 14 (Figur 3) für die Verteilerleiste 1 ersetzt.

Auf seiner den Steckzungen 27 abgewandten Seite weist der Stromschutzstecker 28 Federkontakte 29 auf, die an Kontaktflecken 30 des Stromschutzsteckers 28 anliegen. Die Federkontakte sind mit Leiterbahnen auf der gegenüberliegenden Seite der Leiterplatte 26 des Stromschutzsteckers 28 verbunden. Diese Leiterbahnen führen zu den zugehörigen Kontaktstellen der Steckzungen 27. Der Kontaktfleck 30 ist mit einer unterbrochenen Leiterbahn 31 verbunden, die ebenfalls zum Ende der Steckzungen 27 führt. Die Stromsicherung 20 ist zu beiden Seiten der Unterbrechungsstelle an die Leiterbahn 31 angelötet, wodurch die beiden Leiterbahnteile elektrische miteinander verbunden sind.

Es ist aber auch möglich, insbesondere bei einzelnen Steckern für die einzelnen Leitungen anstelle der Unterbrechungsstelle die Leiterbahn im Feinätzverfahren soweit zu verengen, daß sie unmittelbar als Schmelzsicherung dient.

Ferner ist es auch möglich, an die Leiterbahnen 31 Kontaktteile anzulöten, in denen die Stromsicherungen 20 gehalten sind.

Die Federkontakte 29 sind für Stiftkontakte 32 von Prüfsteckern oder für Trennstecker 33 durch Öffnungen eines strichpunktiert angedeuteten Steckergehäuses 34 zugänglich. Dabei werden die Federkontakte 29 von den Kontaktflecken 30 abgehoben und die Verbindungen zwischen den Leitungen unterbrochen.

**Ansprüche**

1. Schutzeinrichtung für einen Verteiler in einer Telekommunikations-, insbesondere Fernsprechanlage mit Überspannungsableitern (19) als Querglied gegen Erde und Stromsicherungen (20) als Längsglied, wobei der Verteiler Kontaktbauteile (21, z. B. 1) aufweist, die mit in Reihen angeordneten Anschlußelementen (z. B. 2) für ankommende Leitungen (3) und Anschlußelementen (z. B. 2) für abgehende Leitungen (4) versehen sind, wobei die Anschlußelemente mit zweipoligen Steckkontakten für Schutzstecker mit den Stromsicherungen (20) versehen sind und wobei die Anschlußelemente elektrisch mit den Überspannungsableitern (19) verbindbar sind,
**dadurch gekennzeichnet,**
daß die Stromsicherungen (20) auf einem Stromschutzstecker (14, 23, 28) und die Überspannungsableiter (19) auf einem separaten Spannungsschutzstecker (13, 25) angeordnet sind, daß für die beiden Schutzstecker getrennte Steckkontakte vorgesehen sind, daß die Steckkontakte (11, 24) für den Spannungsschutzstecker (13, 25) einpolig ausgebildet sind und daß die zweipoligen Steckkontakte (12) für den Stromschutzstecker bei gezogenem Stecker geschlossen sind.

2. Schutzeinrichtung nach Anspruch 1,
**dadurch gekennzeichnet,**
daß die beiden Schutzstecker von der Bedienungsseite her in die Kontaktbauteile (z. B. 1) einsteckbar sind.

3. Schutzeinrichtung nach Anspruch 1,
**dadurch gekennzeichnet,**
daß der Spannungsschutzstecker (25) auf der Rückseite des Kontaktbauteils (21) angeordnet ist, daß der Stromschutzstecker (23) auf der Bedienungsseite des Kontaktbauteils (21) angeordnet ist und daß dabei die Anschlußelemente (2) für die rangiebaren ankommenden Leitungen (3) frei zugänglich sind.

4. Schutzeinrichtung nach Anspruch 1, 2 oder 3,
**dadurch gekennzeichnet,**
daß der Stromschutzstecker (14, 23) in zwei Einsteckstufen ansetzbar ist, in denen die Verbindung zwischen den ankommenden und abgehenden Leitungen (3, 4) entweder getrennt oder geschlossen ist.

5. Schutzeinrichtung nach einem der vorhergehenden Ansprüche,
**dadurch gekennzeichnet,**
daß für jede Leitung jeweils ein gesonderter Stromschutzstecker vorgesehen ist.

6. Schutzeinrichtung nach einem der vorhergehenden Ansprüche,
**dadurch gekennzeichnet,**
daß der Stromschutzstecker (28) Kontaktstellen (z. B. 29, 30) für Prüfstecker (32) oder Trennstecker (33) aufweist.

FIG 1

FIG 2

FIG 3

**FIG 4**

**FIG 5**